# FASCICULE DE BREVET EUROPEEN

(11) **EP 3 080 504 B1**
(45) Date de publication et mention de la délivrance du brevet: **13.09.2017**
(21) Numéro de dépôt: 14812456.3
(22) Date de dépôt: 11.12.2014
(51) Int. Cl.: F16L 33/01, G01M 3/18, G01M 3/40

(54) **EMBOUT DE CONNEXION D'UNE CONDUITE FLEXIBLE, DISPOSITIF ET PROCÉDÉ ASSOCIÉS**
VERBINDUNGSENDSTÜCK EINES FLEXIBLEN ROHRS, ZUGEHÖRIGE VORRICHTUNG UND VERFAHREN
CONNECTION END-PIECE OF A FLEXIBLE PIPE, ASSOCIATED DEVICE AND METHOD

(30) Priorité: 12.12.2013 FR 1362497
(43) Date de publication de la demande: 19.10.2016
(73) Titulaire: Technip France, 92400 Courbevoix (FR)
(72) Inventeur: NICOLAS, Yann, F-76380 Canteleu (FR); LEMBEYE, Philippe, F-76380 Montigny (FR)
(74) Mandataire: Lavoix
(86) Numéro de dépôt international: PCT/EP2014/077466
(87) Numéro de publication internationale: WO 2015/086784

(56) Documents cités:
- WO-A1-03/071179
- WO-A1-2013/149983
- FR-A1- 2 790 087

## Description

La présente invention concerne un embout de connexion d'une conduite flexible de transport de fluide, présentant un axe central, l'embout comportant :
- au moins une région d'extrémité d'une couche à surveiller de la conduite flexible, la région d'extrémité étant au moins partiellement métallique ;
- un tronçon d'extrémité d'une gaine de pression de la conduite flexible ;
- une voûte d'extrémité et un capot fixé sur la voûte d'extrémité, la voûte d'extrémité et le capot délimitant entre eux une chambre.

Un tel embout est destiné notamment à la surveillance de l'intégrité des couches de la conduite, en particulier de l'intégrité de la carcasse interne par rapport aux autres couches de la conduite.

La conduite est de préférence une conduite flexible de type non liée (« unbonded » en anglais) destinée au transport d'hydrocarbures à travers une étendue d'eau, tel qu'un océan, une mer, un lac ou une rivière.

Une telle conduite flexible est par exemple réalisée suivant les documents normatifs API 17J (Specification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide. L'ensemble de surface peut être une plateforme semi-submersible, un FPSO ou un autre ensemble flottant.

Certaines de ces conduites sont utilisées dans des conditions très sévères. Ainsi, les hydrocarbures transportés peuvent présenter une pression et une température très élevées, par exemple une pression comprise entre 500 bar et 1000 bar, et une température comprise entre 110°C et 130°C. De plus, dans le cas où la conduite est immergée à grande profondeur, celle-ci doit être capable de résister à une pression externe très élevée, par exemple de l'ordre de 250 bar si la conduite est immergée à 2500 mètres de profondeur.

Les conduites destinées aux grandes profondeurs doivent aussi résister aux très fortes tensions, couramment plusieurs dizaines de tonnes, auxquelles elles sont soumises en service et/ou lors de leur installation en mer.

En outre, dans le cas où l'ensemble de surface est flottant et mobile en fonction des conditions de mer, les conduites montantes (« risers » en anglais) reliant le fond marin à l'ensemble de surface peuvent parfois être soumises à des millions de cycles de variation de courbure. Ces conduites montantes dynamiques doivent donc aussi être capables de résister durablement à des sollicitations en fatigue.

Les embouts de connexion, qui sont particulièrement sollicités, doivent eux aussi être conçus pour résister à de telles conditions de service.

Or, il a été constaté que dans certaines conditions particulièrement sévères, l'extrémité de la carcasse interne de la conduite flexible pouvait en cours de production reculer et glisser en s'éloignant de l'embout.

Ce problème concerne plus particulièrement les conduites flexibles multigaines à haute température. Les reculs de carcasse s'accompagnent d'un arrachement ou d'une rupture de la soudure qui retient la carcasse à la bague d'arrêt fixée sur la voûte d'extrémité de l'embout de la conduite flexible. Le phénomène a aussi été observé dans certaines conduites haute température comportant une gaine unique (voir par exemple WO 99/19656).

Les causes de ce phénomène sont complexes et font intervenir notamment le poids pendu de la conduite, des effets de dilatation thermiques et la perte progressive du plastifiant présent initialement dans certaines gaines de la conduite, notamment celles à base de polyfluorure de vinylidène (PVDF). Dans certains cas critiques, l'arrachement de la carcasse interne peut être suivi par une rupture d'étanchéité au niveau de la gaine de pression.

Pour pallier ce problème, il est connu de suivre régulièrement l'évolution des mouvements relatifs de la carcasse interne par rapport à l'embout, afin de pouvoir arrêter la production lors d'un mouvement anormal de la carcasse interne, ou lors d'un arrachement.

À cet effet, des méthodes connues consistent à introduire un outil d'inspection dans le passage de circulation des hydrocarbures, par exemple un outil équipé d'une caméra vidéo permettant d'examiner la zone de transition entre la carcasse interne et l'embout. Une telle méthode nécessite d'interrompre la production et ne peut donc pas être menée en continu lors de la production.

WO 03/071179 décrit une méthode de suivi dans laquelle un aimant de faible taille est inséré à l'intérieur de la gaine de pression. Le mouvement de l'aimant est suivi par l'intermédiaire de capteurs disposés dans la voûte d'extrémité de l'embout. La méthode permet de suivre en continu les mouvements de la gaine de pression par rapport à l'embout.

Dans le cas où la carcasse et la gaine sont parfaitement solidaires, notamment lorsque la gaine est ancrée à la carcasse par des tétons de fluage, cette méthode permet aussi de suivre de façon indirecte les mouvements de la carcasse interne par rapport à l'embout

Cependant, dans certains cas, la gaine de pression et la carcasse ne sont pas parfaitement solidaires, la gaine de pression pouvant rester en place, lors du recul de la carcasse. Ceci est notamment le cas lorsqu'une couche intermédiaire de type gaine sacrificielle, est interposée entre la gaine de pression et la carcasse.

Dans ce cas, il est souhaitable de surveiller de manière indépendante les mouvements de la carcasse par rapport à la gaine de pression.

WO-A-2013/149983 décrit un assemblage comportant une conduite flexible comprenant une carcasse, un tube métallique et un transducteur ultrasonore. Le tube métallique est installé à l'intérieur de la conduite et est fixé solidairement à la carcasse. Le transducteur ultrasonore est propre à mesurer le déplacement du tube métallique par rapport à sa position initiale, ce qui permet d'en déduire le déplacement de la carcasse.

Cependant, la présence du tube métallique à l'intérieur de la conduite réduit localement le diamètre intérieur de la conduite, ce qui est susceptible de perturber l'écoulement des fluides circulant le long de la conduite.

FR 2 790 087 A décrit également un embout de connexion d'une conduite flexible.

Un but de l'invention est donc de fournir des moyens simples et fiables de suivi du déplacement d'une couche particulière d'une conduite flexible par rapport aux autres couches, sans avoir à interrompre la production du fluide circulant à travers la conduite flexible.

À cet effet, l'invention a pour objet un embout selon la revendication 1.

L'embout selon l'invention peut comprendre l'une ou plusieurs des caractéristiques des revendications 2 à11, prise(s) isolément ou suivant toute combinaison techniquement possible selon les revendications. L'invention a aussi pour objet un dispositif selon la revendication 12.

Le dispositif selon l'invention peut comprendre les caractéristiques de la revendication 13.

L'invention a aussi pour objet un procédé selon la revendication 14.

Le procédé selon l'invention peut comprendre les caractéristiques de la revendication 15.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'un tronçon central d'une première conduite flexible selon l'invention ;
- la figure 2 est une vue partielle, prise en coupe suivant un plan axial médian, d'un embout selon l'invention de la conduite de la figure 1 ;
- la figure 3 est une vue d'un détail de la figure 2, illustrant un mode de positionnement du capteur dans l'embout de la figure 2 ;
- la figure 4 est une vue des parties pertinentes de l'embout de la figure 2, illustrant la disposition relative du capteur et de la couche à surveiller ;
- la figure 5 est une vue analogue à la figure 4 illustrant une modélisation du champ magnétique en présence de la couche à surveiller ;
- la figure 6 est une vue analogue à la figure 5, illustrant une modélisation du champ magnétique en l'absence de la couche à surveiller.

Dans tout ce qui suit, les termes « extérieur » et « intérieur » s'entendent généralement de manière radiale par rapport à un axe A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

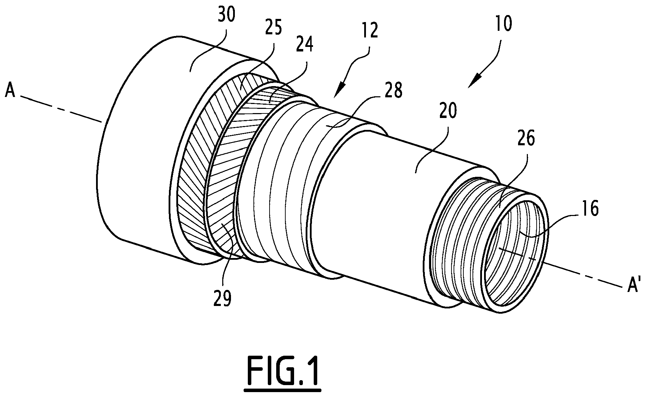

Une première conduite flexible 10 selon l'invention est illustrée partiellement par la figure 1.

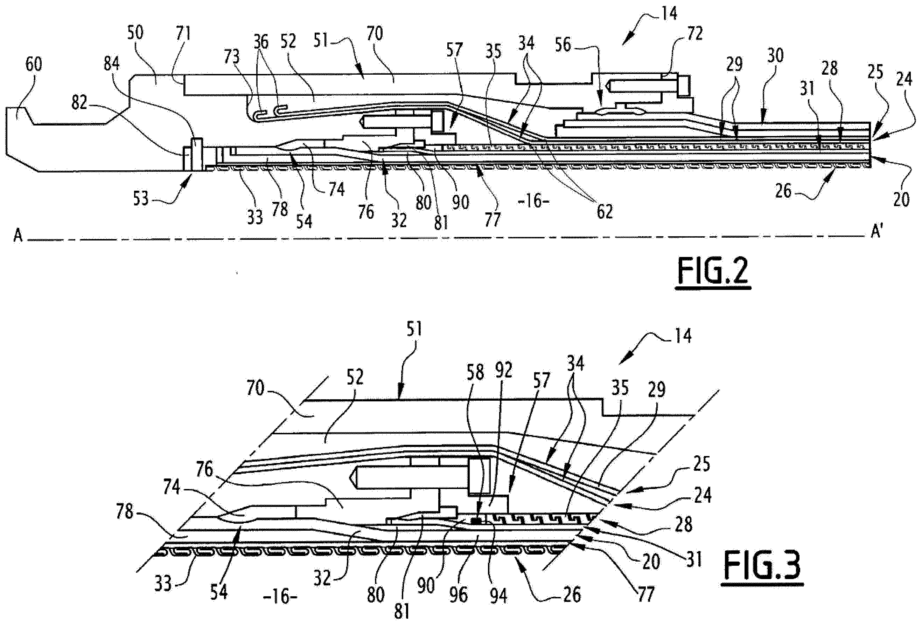

La conduite flexible 10 comporte un tronçon central 12 illustré en partie sur la figure 1. Elle comporte, à chacune des extrémités axiales du tronçon central 12, un embout d'extrémité 14 (non visible sur la figure 1) dont les parties pertinentes sont représentées sur les figures 2 à 6.

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10. Il débouche à travers les embouts 14.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

Selon l'invention, la conduite 10 comporte au moins une première gaine tubulaire 20 à base de matériau polymère constituant avantageusement une gaine de pression.

La conduite 10 comporte en outre au moins une couche d'armures de traction 24, 25 disposée extérieurement par rapport à la première gaine 20 formant une gaine de pression.

Dans cet exemple, la conduite 10 comporte en outre une carcasse interne 26 disposée à l'intérieur de la gaine de pression 20, une voûte de pression 28 intercalée entre la gaine de pression 20 et la ou les couches d'armures de traction 24, 25 et une gaine externe 30, destinée à la protection de la conduite 10.

La conduite 10 comporte en outre avantageusement une gaine sacrificielle externe 31 disposée entre la voûte de pression 28 et la gaine de pression 20, ainsi qu'une gaine sacrificielle interne 77 disposée entre la carcasse interne 26 et la gaine de pression 20. Les gaines sacrificielles interne 77 et externe 31 sont représentées sur les figures 2 et 3.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La gaine de pression 20 comporte un tronçon d'extrémité 32 inséré dans l'embout 14.

La carcasse 26 est formée par exemple d'un feuillard métallique profilé, enroulé en spirale. Les spires du feuillard sont avantageusement agrafées les unes aux autres. La fonction principale de la carcasse 26 est de reprendre les efforts radiaux d'écrasement.

La carcasse 26 est ainsi totalement métallique.

Dans cet exemple, la carcasse 26 est disposée à l'intérieur de la gaine de pression 20. La conduite est alors désignée par le terme anglais « rough bore » en raison de la géométrie de la carcasse 26.

La carcasse 26 est propre à entrer en contact avec le fluide circulant dans la gaine de pression 20.

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

La carcasse 26 comporte une région d'extrémité 33 disposée au niveau de l'embout 14, intérieurement par rapport au tronçon d'extrémité 32 de la gaine de pression 20. La région d'extrémité 33 de la carcasse 26 s'étend axialement vers l'avant au-delà du tronçon d'extrémité 32 de la gaine de pression 20

Dans cet exemple, la voûte de pression 28 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

La voûte de pression 28 présente une région d'extrémité 35 insérée dans l'embout 14, à l'extérieur du tronçon d'extrémité 32 de la gaine de pression 20. Le tronçon d'extrémité 32 de la gaine de pression 20 s'étend axialement vers l'avant au-delà de la région d'extrémité 35 de la voûte de pression 28.

Les gaines sacrificielles intérieure 77 et extérieure 31, lorsqu'elles sont présentes, ont pour fonction de protéger la gaine de pression 20 du risque de fissuration en fatigue, notamment dans le cas des applications dynamiques haute température. Une conduite équipée de gaines sacrificielles est dite « multigaines ».

Les gaines sacrificielles intérieure 77 et extérieure 31 sont avantageusement réalisées en matériau polymère. Elles présentent chacune une épaisseur inférieure à celle de la gaine de pression 20, typiquement de l'ordre de 3 mm. Les gaines sacrificielles intérieure 77 et extérieure 31 s'étendent partiellement dans l'embout 14 au-delà axialement de la région d'extrémité 35 de la voûte de pression 28.

La conduite flexible 10 selon l'invention comprend au moins une couche d'armures 24, 25 formée d'un enroulement hélicoïdal d'au moins un élément d'armure 29 allongé.

Dans l'exemple représenté sur la figure 1, la conduite flexible 10 comporte une pluralité de couches d'armures 24, 25, notamment une couche d'armures intérieure 24, appliquée sur la voûte de pression 28 et une couche d'armures extérieure 25 autour de laquelle est disposée la gaine extérieure 30.

Chaque couche d'armures 24, 25 comporte des éléments d'armure 29 longitudinaux enroulés à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, a étant compris entre 25° et 55°, l'angle d'enroulement des éléments d'armure 29 de la deuxième couche d'armures 25 disposée au contact de la première couche d'armures 24 est par exemple égal à - α°.

Les éléments d'armure 29 sont par exemple formés par des fils métalliques, notamment des fils en acier, ou par des rubans en matériau composite, par exemple des rubans renforcés de fibres de carbone. Dans les exemples représentés sur les figures 2 à 5, les éléments d'armure 29 sont formés par des fils métalliques.

Comme on le verra plus bas, les éléments d'armure 29 présentent chacun un tronçon d'extrémité 34 introduit dans l'embout 14. Le tronçon d'extrémité 34 s'étend jusqu'à une extrémité libre disposée dans l'embout 14. Il présente avantageusement une trajectoire pseudo-hélicoïdale d'axe A-A' dans l'embout 14, l'hélice s'enroulant sur une enveloppe conique.

Dans l'exemple représenté sur les figures 2 et 3, pour chaque couche d'armures 24, 25, les tronçons d'extrémité 34 des éléments d'armure 29 s'étendent de manière divergente à l'écart de l'axe A-A', puis convergente vers l'axe A-A' depuis un point de décollement arrière 62 vers une extrémité avant libre 36.

La gaine externe 30 est destinée à empêcher la perméation de fluide depuis l'extérieur de la conduite flexible 10 vers l'intérieur. Elle est avantageusement réalisée en matériau polymère, notamment à base d'un polyoléfine, tel que du polyéthylène, ou à base d'un polyamide, tel que du PA11 ou du PA12

L'épaisseur de la gaine externe 30 est par exemple comprise entre 5 mm et 15 mm.

Comme illustré par les figures 2 et 3, outre les tronçons d'extrémité 32, 34, et les régions d'extrémité 33, 35, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, une chambre 52 de réception des tronçons d'extrémité 34 des éléments d'armure 29, et de la région d'extrémité 35 de la voûte 28.

L'embout 14 comporte en outre un ensemble 53 de calage axial de la carcasse 26 sur la voûte d'extrémité 50, un ensemble avant 54 d'étanchéité autour de la gaine de pression 20, un ensemble arrière 56 d'étanchéité autour de la gaine extérieure 30, et un ensemble 57 de maintien de la voûte de pression 28.

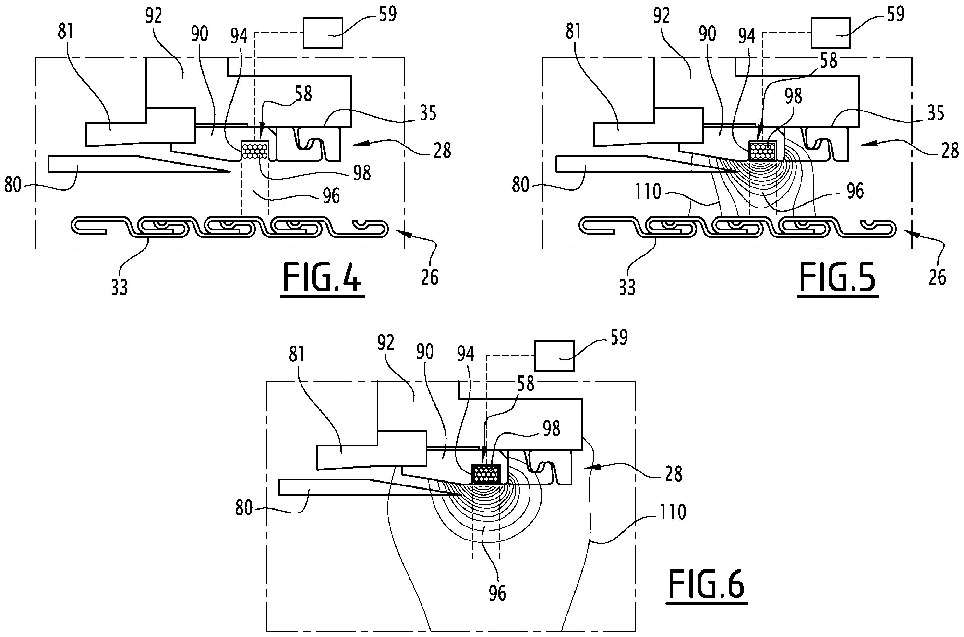

Selon l'invention, l'embout 14 comporte au moins un capteur 58 de détection du positionnement d'une couche à surveiller, dans cet exemple la carcasse 26. Le capteur 58 est raccordé électriquement à une unité 59 de traitement, visible sur la figure 4. L'embout 14 et l'unité 59 forment ainsi un dispositif de suivi de l'intégrité de la conduite flexible 10.

Dans cet exemple, la voûte d'extrémité 50 est destinée à raccorder la conduite 10 à un autre embout de connexion 14 ou à des équipements terminaux, avantageusement par l'intermédiaire d'une bride d'extrémité 60.

La voûte d'extrémité 50 présente un alésage central destiné à recevoir l'extrémité de la gaine de pression 20 et à permettre l'écoulement du fluide circulant à travers le passage central 16 vers l'extérieur de la conduite 10.

Le capot 51 comporte une paroi périphérique 70 tubulaire s'étendant autour de l'axe A-A'. La paroi périphérique 70 présente un bord avant 71 fixé sur la voûte d'extrémité 50, à l'écart radialement des couches d'armures 24, 25 et un bord arrière 72 s'étendant axialement vers l'arrière au-delà de la voûte d'extrémité 50.

Le capot 51 délimite la chambre 52 radialement vers l'extérieur. Une face arrière 73 de la voûte d'extrémité 50 délimite axialement la chambre 52 vers l'avant.

L'ensemble avant d'étanchéité 54 est avantageusement situé à l'avant de l'embout 14, en contact avec la voûte d'extrémité 50.

De manière connue, il comporte une bague avant 74 de sertissage, destinée à venir en prise sur la gaine de pression 20, une bride de sertissage 76, et dans cet exemple, une canule principale d'appui 78, disposée sous la bride de sertissage 76.

Le serrage de la bride 76 contre la voûte 50 a pour effet de déformer radialement la bague avant 74 de sertissage, de sorte que cette dernière vienne en prise radialement sur la gaine de pression 20. Le tronçon d'extrémité 32 de la gaine 20 est ainsi enserré entre la bague avant de sertissage 74 et la canule d'appui 78 et/ou la carcasse 26, permettant la réalisation d'une étanchéité.

Lorsque la conduite 10 présente une gaine sacrificielle interne 77, la canule d'appui 78 est insérée entre cette gaine sacrificielle interne 77 et la gaine de pression 20.

Lorsque la conduite 10 présente une gaine sacrificielle externe 31, l'ensemble avant d'étanchéité 54 comporte en outre une canule auxiliaire 80 insérée entre la gaine sacrificielle externe 31 et le tronçon d'extrémité 32 de la gaine 20, et une bague auxiliaire de sertissage 81 de la gaine sacrificielle externe 31.

La canule auxiliaire 80 est calée sous la bride de sertissage 76, à l'arrière de la canule principale 78. La bague auxiliaire de sertissage 81 est disposée sur l'extrémité de la gaine sacrificielle externe 31, en regard de la canule auxiliaire 80, pour enserrer radialement l'extrémité de la gaine sacrificielle externe 31.

L'ensemble de calage 53 de la carcasse 26 comporte une bague d'arrêt 82 fixée à la voûte d'extrémité 50 à l'aide de goupilles 84. La région d'extrémité 33 de la carcasse 26 est fixée sur la bague d'arrêt 82, par exemple par soudure.

La bague d'arrêt 82 s'étend axialement à l'avant du tronçon d'extrémité de la gaine 20, et à l'avant de la canule principale 78.

En référence à la figure 3, l'ensemble de maintien 57 de la voûte de pression 28 comporte une bague intermédiaire d'arrêt 90 de la voûte de pression 28, et un manchon annuaire de maintien 92, fixé axialement par rapport à la voûte d'extrémité 50, le manchon 92 couvrant radialement vers l'extérieur la région d'extrémité 35 de la voûte de pression 28.

Dans cet exemple, le manchon annuaire de maintien 92 est fixé sur la voûte d'extrémité 50 par l'intermédiaire de la bague avant de sertissage 74.

La bague intermédiaire d'arrêt 90 est disposée en appui radial dans le manchon 92.

Elle est calée radialement entre le manchon 92 et la gaine de pression 20, avec interposition éventuelle de la couche intermédiaire 31, lorsqu'une telle couche est présente.

La bague intermédiaire d'arrêt 90 est ici disposée à l'extrémité avant de la voûte 28 et avantageusement à l'arrière de la canule auxiliaire 80 et/ou à l'arrière de la bride avant 76.

Selon l'invention, la bague intermédiaire d'arrêt 90 délimite un logement radial 94 de réception du capteur 58. Le logement radial 94 débouche radialement vers l'axe A-A'. Il est obturé radialement vers l'extérieur et axialement vers l'avant et vers l'arrière par le corps de la bague 90.

Dans cet exemple, le logement 94 est formé par une gorge annulaire ménagée dans la bague intermédiaire 90, la gorge débouchant vers l'axe A-A'.

L'espace radial 96 défini entre la sortie du logement 94 et la carcasse 26 contient une section circonférentielle de la gaine 20 et éventuellement des gaines sacrificielles externe 31 et interne 77. Cet espace radial 96 est dépourvu d'écran métallique intermédiaire susceptible de perturber la mesure du capteur 58.

Le capteur 58 est reçu dans le logement 94. Un matériau de remplissage bouche avantageusement le logement 94 vers l'axe A-A', pour maintenir le capteur 58 dans le logement 94. Le matériau de remplissage est par exemple une résine époxy.

La distance radiale séparant le capteur 58 de la carcasse 26 est ainsi inférieure à 3 cm et est notamment comprise entre 1 cm et 2 cm.

Cette distance est non nulle, le capteur 58 étant disposé radialement à l'écart de la carcasse 26, sans contact avec la carcasse 26. La gaine de pression 20 est interposée entre le capteur 58 et la carcasse 26.

Le capteur 58 est par ailleurs logé à l'intérieur du capot 51 dans la chambre 52, de préférence radialement entre les tronçons d'extrémité 34 des éléments d'armures 24, 25 et la gaine de pression 20.

Le capteur 58 est en outre disposé totalement en dehors de la voûte d'extrémité 50, avantageusement à l'arrière axialement de la voûte d'extrémité 50 le long de l'axe A-A'.

Dans cet exemple, le capteur 58 est un capteur de détection électromagnétique, propre à détecter une variation du champ électromagnétique local lors d'un déplacement de la carcasse 26 par rapport à la gaine 20 et par rapport à la bague 90.

Le capteur 58 est par exemple un capteur inductif ou de préférence, un capteur à courant de Foucault.

Dans ce dernier cas, en référence aux figures 4 à 6, le capteur 58 comporte une bobine 98 disposée dans le logement 94. La bobine 98 est propre à induire à distance des courants de Foucault dans la carcasse 26 à l'aide d'un champ magnétique variable. Ce champ est engendré par la bobine 98 sous la commande de l'unité 59 lors de l'alimentation électrique de la bobine 98 par un courant électrique alternatif à une fréquence par exemple comprise entre 1 kHz et 1 MHz, notamment entre 5 kHz et 200 kHz.

Les courants de Foucault induits dans la carcasse 26, à sa surface du fait de l'effet de peau, engendrent à leur tour un champ magnétique qui s'oppose au champ qui leur a donné naissance.

Le champ total résultant au niveau du capteur 58 dépend alors de la position de la carcasse 26. Ce champ total résultant engendre une tension aux bornes de la bobine 98 dont l'amplitude et la phase varie en fonction de la position de la carcasse 26 par rapport au capteur 58.

L'unité 59 est propre à mesurer en temps réel l'amplitude et la phase de la tension mesurée par le capteur 58, qui sont représentatives de l'impédance complexe de la bobine 98. Cette impédance complexe dépend de la présence et de la position de la carcasse 26, et également des propriétés électromagnétiques de la carcasse 26, et de toutes les pièces conductrices situées à proximité de la bobine 98.

La température de l'embout 14 influe sur le signal mesuré, puisqu'elle affecte la conductivité électrique et la perméabilité magnétique des pièces métalliques, ce qui a pour effet d'affecter la répartition des courants de Foucault induits dans ces pièces.

L'unité 59 comporte donc un module de correction du signal propre à éliminer l'influence de la température, un module de quantification du glissement axial de la carcasse 26 sur une amplitude faible, par exemple de l'ordre de quelques millimètres, et un module de détection de la disparition totale de la carcasse 26 de l'espace radial 96 situé en regard du capteur 58.

Le module de correction du signal est propre à éliminer l'influence de la température, par exemple par optimisation de fréquence, par projection de la phase sur un axe perpendiculaire à celui correspondant aux variations de la température, par traitement multifréquences, ou/et par mesure différentielle utilisant une deuxième bobine de référence.

Le module de quantification du glissement comporte des moyens de linéarisation du signal. Ces moyens sont calibrés à l'aide d'un étalonnage effectué préalablement.

Le module de détection de la disparition comporte des moyens de comparaison de l'intensité du signal à une valeur seuil, la variation d'intensité du signal étant significative en l'absence de carcasse 26, par rapport à la valeur mesurée lorsque la carcasse 26 est située en regard du capteur 58.

La bobine 98 encercle avantageusement la gaine de pression 20 et est coaxiale avec l'embout 14.

La bobine 98 est compacte. Elle présente une hauteur axiale inférieure à 10 mm, et notamment comprise entre 3 mm et 7 mm. Elle présente une épaisseur radiale inférieure à 5 mm, et notamment comprise entre 1 mm et 3 mm.

Elle est par exemple formée en fil de cuivre isolé de diamètre compris entre 0,05 mm et 0,5 mm pour être disposée à l'intérieur du logement 94.

L'ensemble arrière d'étanchéité 56 est placé à l'arrière de l'ensemble avant d'étanchéité 54.

Il comporte au moins une bague arrière de sertissage 100 sertissant la gaine externe 30, et une bride arrière 102 de serrage de la bague arrière 100, fixée sur le capot 51, avantageusement au niveau du bord arrière 72 de la paroi périphérique 70.

Le fonctionnement du dispositif de détection comportant l'embout 14 selon l'invention va maintenant être décrit, dans le cadre de la surveillance du déplacement de la carcasse 26 par rapport à la gaine 20.

Lors de la production, un hydrocarbure, par exemple du pétrole, circule dans le passage intérieur 16 de la conduite 10, au contact avec la carcasse 26.

Le capteur 58 est activé à chaque instant de mesure par l'unité 59. Comme illustré par la figure 5, la bobine 98 du capteur 58 est alimentée par un courant électrique alternatif engendrant un champ magnétique variable 110 dirigé radialement vers l'axe A-A' en direction de la carcasse 26.

L'espace radial intermédiaire 96 entre la bobine 98 du capteur 58 et la carcasse 26 est dépourvu d'écran métallique, puisqu'il contient uniquement une section circonférentielle de la gaine 20 et éventuellement des gaines sacrificielles externe 31 et interne 77.

Les matériaux polymériques constituant la gaine de pression 20 et les gaines sacrificielles 31, 77 sont à la fois électriquement isolants (conductivité électrique nulle) et amagnétiques (perméabilité magnétique identique à celle du vide).

Ces matériaux se comportent donc comme de l'air ou du vide, si bien que le champ magnétique variable 110 traverse facilement l'espace radial 96 sans subir une atténuation importante. De la sorte, le champ magnétique variable 110 présente une intensité importante lorsqu'il atteint le voisinage de la carcasse 26, ce qui permet d'améliorer la sensibilité de détection et de mesure des glissements de la carcasse 26.

Le champ magnétique variable 110 induit à la surface de la carcasse 26, par effet de peau, des courants de Foucault. Comme indiqué plus haut, les courants de Foucault induits engendrent à leur tour un champ magnétique qui s'oppose au champ qui leur a donné naissance.

Un champ magnétique total résultant est alors mesuré au voisinage de la bobine 98. Ce champ magnétique total engendre une tension aux bornes de la bobine 98 dont l'amplitude et la phase sont mesurées par l'unité 59 et sont représentatives d'une impédance complexe. Ceci revient à mesurer l'impédance complexe de la bobine 98. Cette impédance complexe dépend de la répartition des courants de Foucault induits dans toutes les pièces conductrices situées au voisinage de la bobine 98. Elle dépend donc en particulier de la présence et de la position de la carcasse 26.

L'impédance complexe de la bobine 98 peut être représentée par un point dans un plan complexe, l'abscisse de ce point correspondant à la partie réelle de l'impédance c'est-à-dire à la résistance, et l'ordonnée de ce point correspondant à la partie imaginaire de l'impédance c'est-à-dire à la réactance.

Les principaux paramètres qui peuvent modifier l'impédance complexe de la bobine 98 et qui sont susceptibles de varier en cours de production sont d'une part, la position de la carcasse et d'autre part, la température de l'embout.

En effet, la température a une influence sur la conductivité électrique des matériaux conducteurs, ainsi que sur la perméabilité magnétique des matériaux magnétiques. Or, plusieurs pièces situées à portée du champ magnétique variable 110 sont constituées de matériaux conducteurs et parfois aussi ferromagnétiques, notamment la carcasse 26, la canule auxiliaire 80, la bague intermédiaire d'arrêt 90, la région 35 d'extrémité de la voûte de pression 28, la bague auxiliaire de sertissage 81 et le manchon annulaire de maintien 92. Le champ magnétique variable 110 étant susceptible d'induire des courants de Foucault dans toutes ces pièces, la distribution de ces courants de Foucault dans ces pièces dépend potentiellement de la conductivité électrique et de la perméabilité magnétique des matériaux constituant ces pièces.

Une variation de température engendre donc une variation de la conductivité électrique et de la perméabilité magnétique de ces pièces, ce qui modifie la répartition des courants de Foucault et le champ induit par ces derniers, ce qui a finalement pour effet de modifier l'impédance complexe de la bobine 98.

Il est donc avantageux de traiter le signal afin de distinguer l'influence de la température de celle de la position de la carcasse 26. Le traitement le plus simple consiste à choisir la fréquence du champ variable 110, de sorte que les variations d'impédance complexe associées d'une part à une variation de température et d'autre part à un recul de la carcasse 26 présentent dans le plan complexe des phases significativement différentes, et d'utiliser ensuite ce déphasage pour distinguer ces deux phénomènes. Ce type de traitement est de préférence mis en oeuvre lorsque le déphasage est supérieur à 45°, idéalement proche de 90°.

Dans une variante, plusieurs fréquences sont utilisées simultanément pour effectuer le traitement. Ceci permet de mesurer plusieurs impédances complexes correspondant à plusieurs fréquences, et de combiner ensuite ces différents signaux pour maximiser la sensibilité de mesure des mouvements de la carcasse 26, tout en minimisant l'influence des paramètres perturbateurs que l'on ne cherche pas à mesurer, typiquement l'influence de la température.

En pratique, on utilise avantageusement deux à trois fréquences différentes, par exemple séparées les unes des autres d'un facteur multiplicatif au moins supérieur à cinq (par exemple les trois fréquences 2 kHz, 15 kHz et 100 kHz). Un tel traitement est susceptible de faire varier significativement l'effet de peau et permet d'obtenir plus d'informations que si l'on avait travaillé avec une seule fréquence. Ce traitement multifréquences est plus performant que le traitement monofréquence.

Le module de correction présent dans l'unité 59 corrige le signal mesuré pour s'adapter aux variations de température présentes dans l'embout 14 et éliminer l'influence de la température, par les moyens décrits plus haut.

Le module de correction transforme donc en temps réel la ou les impédances mesurées en un signal intermédiaire à la fois peu sensible aux variations de température et dépendant de la position de la carcasse 26.

Ce signal intermédiaire est généralement une fonction non linéaire de la position axiale de la carcasse. Le module de quantification présent dans l'unité 59 linéarise ce signal intermédiaire, ce qui permet d'évaluer précisément l'amplitude du déplacement de la carcasse 26. Ce traitement permet notamment de mesurer les glissements de faible amplitude, ce qui permet de détecter un début de glissement de carcasse longtemps avant une éventuelle rupture de la fixation.

En cas de rupture de la fixation de la carcasse 26 à la voûte d'extrémité 50, par arrachement de la carcasse 26 et/ou de la soudure fixant la carcasse 26 sur la bague 82, la carcasse 26 se déplace vers l'arrière à l'écart axialement du capteur 58.

Comme illustré par la figure 6, le champ électromagnétique 110 est alors significativement affecté.

Le signal mesuré subit donc une variation importante, par exemple de l'ordre de 5 %, qui est facilement détectée par le module de détection de l'unité 59.

L'unité 59 est alors apte à détecter le détachement critique de la carcasse 26 par une simple détection de seuil, sans nécessairement avoir à linéariser le signal.

L'embout 14 selon l'invention autorise donc la détection rapide et efficace d'un mouvement d'une couche métallique à surveiller au sein de l'embout 14, voire le détachement critique de la couche à surveiller. La couche à surveiller est en particulier la carcasse 26, mais pourrait être une autre couche comportant au moins un élément métallique dans sa région d'extrémité.

Cette détection s'adapte facilement à différentes configurations d'embout 14. Elle peut être effectuée sur des embouts 14 situés au niveau supérieur de la conduite flexible 10, par exemple sur l'embout supérieur 14 d'une conduite flexible montante dynamique, en se branchant directement sur un connecteur placé à la surface de l'embout 14.

La mesure peut également être effectuée sur un embout 14 situé dans ou au fond de l'étendue d'eau. L'alimentation électrique est alors réalisée depuis la surface par un câble interne ou externe à la conduite flexible 10. La mesure d'impédance est effectuée dans l'embout 14 et est remontée vers la surface via le câble d'alimentation, ou via un deuxième câble. L'information peut également être transmise en surface par un signal de communication sans fil entre l'embout 14 et la surface.

L'installation du capteur 58 dans un logement 94 de la bague intermédiaire d'arrêt 90 est particulièrement avantageuse, puisqu'elle constitue une modification mineure de l'embout 14 qui ne requiert pas de qualification lourde.

La détection effectuée ne perturbe pas la production et peut être conduite de manière continue au cours de l'utilisation de la conduite flexible 10.

Dans le mode de réalisation décrit plus haut, l'espace radial intermédiaire s'étendant entre la bobine 98 et la carcasse 26 est totalement dépourvu d'écran métallique, c'est-à-dire que cet espace intermédiaire est amagnétique et électriquement isolant. Cette configuration évite que le champ magnétique variable 110 soit fortement atténué lors de sa traversée de cet espace intermédiaire, ce qui améliore la précision de mesure du glissement de la carcasse 26.

Cependant, le dispositif de suivi fonctionne aussi dans le cas où un écran métallique de faible épaisseur est interposé entre la bobine 98 et la carcasse 26.

Un tel écran métallique est par exemple intégré dans le capteur 58, pour servir de protection mécanique à la bobine 98 et éviter que la bobine 98 ne soit en contact direct avec la gaine sacrificielle externe 31.

L'écran métallique est par exemple placé sous la bobine 98, pour obturer le logement 94 vers l'intérieur.

Pour maintenir une sensibilité adéquate, il est préférable d'une part de réaliser cet écran avec un métal amagnétique moins conducteur que le cuivre, par exemple avec un acier inoxydable austénitique, et d'autre part de limiter l'épaisseur de l'écran, avantageusement à une valeur inférieure à 2 mm, préférentiellement inférieure à 1 mm.

Bien que l'invention ait été décrite dans le cas où le capteur 58 comporte une bobine 98 d'axe confondu avec l'axe A-A' de l'embout 14, d'autres types de bobines pourraient aussi être utilisés.

Dans un exemple, au moins une bobine présente un axe orienté radialement par rapport à l'embout 14.

Dans un tel mode de réalisation, la bobine est avantageusement logée à l'intérieur d'un logement du type trou borgne usiné dans la bague intermédiaire d'arrêt 90. Elle présente donc une longueur et un diamètre extérieur respectivement inférieurs à l'épaisseur et à la longueur de la bague intermédiaire d'arrêt 90. Avantageusement, le diamètre extérieur d'une telle bobine orientée radialement est compris entre 5 mm et 30 mm, préférentiellement entre 10 mm et 20 mm.

Selon des variantes de ce mode de réalisation, plusieurs bobines orientées radialement peuvent être intégrées à différentes positions angulaires dans la bague intermédiaire d'arrêt 90, par exemple deux bobines espacées de 180° ou trois bobines réparties tous les 120°. Ces variantes permettent de surveiller indépendamment plusieurs génératrices de la carcasse 26.

Selon d'autres variantes avantageuses, le capteur 58 est équipé de deux bobines identiques disposées côte à côte et décalées axialement par rapport à l'embout 14.

L'unité 59 est alors être doublée pour mesurer l'impédance de chacune des deux bobines, ainsi que la différence d'impédance entre les deux bobines.

Cette mesure différentielle présente l'avantage d'être intrinsèquement très robuste et très peu sensible aux variations de température, puisque la température a quasiment la même influence sur chacune des deux bobines. De plus, cette mesure différentielle est très sensible aux faibles glissements de la carcasse 26, notamment lorsque la distance séparant les deux bobines n'est pas égale à un multiple du pas d'hélice de la carcasse interne 26.

Pour évaluer précisément un glissement de gaine, il est préférable d'effectuer en parallèle une mesure différentielle et une mesure absolue, ce que permet ce mode de réalisation.

Dans une variante, le capteur 58 est équipé d'un circuit magnétique à base de ferrites. Ceci modifie le champ magnétique variable 110 émis par la bobine 98, pour mieux le diriger vers la carcasse 26. Les pertes par courants de Foucault dans les pièces autres que la carcasse 26 sont alors réduites.

Comme décrit précédemment, le capteur 58 est logé à l'intérieur du capot 51 dans la chambre 52 à l'extérieur radialement du tronçon d'extrémité 32 de la gaine de pression 20. Cette caractéristique rapproche le capteur 58 de la couche à surveiller. Cette couche est donc propre à être surveillée sans avoir à assembler, dans la conduite flexible, un tube métallique interne tel que décrit dans WO 2013/149983.

## Revendications

1. Embout (14) de connexion d'une conduite flexible (10) de transport de fluide, présentant un axe central (A-A'), l'embout (14) comportant :
- au moins une région d'extrémité (33) d'une couche à surveiller (26) de la conduite flexible (10), la région d'extrémité (33) étant au moins partiellement métallique ;
- un tronçon d'extrémité (32) d'une gaine de pression (20) de la conduite flexible (10) ;
- une voûte d'extrémité (50) et un capot (51) fixé sur la voûte d'extrémité (50), la voûte d'extrémité (50) et le capot (51) délimitant entre eux une chambre (52) ;
l'embout (14) comportant un capteur (58) de détection du positionnement de la couche à surveiller (26), apte à détecter un mouvement axial de la région d'extrémité (33), le capteur (58) étant disposé à l'extérieur du tronçon d'extrémité (32) de la gaine de pression (20) et en dehors de la voûte d'extrémité (50),
**caractérisé en ce que** le capteur (58) est logé à l'intérieur du capot (51) dans la chambre (52).

2. Embout (14) selon la revendication 1, **caractérisé en ce que** l'espace radial intermédiaire (96) s'étendant entre le capteur (58) et la couche à surveiller (26) est dépourvu d'écran métallique entre le capteur (58) et la couche à surveiller (26).

3. Embout (14) selon la revendication 1 ou 2, **caractérisé en ce que** la couche à surveiller (26) est une couche métallique disposée à l'intérieur de la gaine de pression (20), en particulier une carcasse intérieure métallique disposée à l'intérieur de la gaine de pression (20).

4. Embout (14) selon l'une quelconque des revendications, **caractérisé en ce que** la région d'extrémité (33) est fixée axialement par rapport à la voûte d'extrémité (50) à l'avant du capteur (58).

5. Embout (14) selon l'une quelconque des revendications précédentes, **caractérisé en ce que** la conduite flexible (10) comporte une voûte de pression (28) entourant la gaine de pression (20), le capteur (58) étant disposé axialement entre d'une part, la région d'extrémité (35) de la voûte de pression (28) et d'autre part, la voûte d'extrémité (50) de l'embout (14).

6. Embout (14) selon l'une quelconque des revendications précédentes, **caractérisé en ce qu'**il délimite un logement radial (94) de réception du capteur (58), le logement radial (94) débouchant radialement vers l'axe central (A-A'), vers la couche à surveiller (26).

7. Embout (14) selon la revendication 6, **caractérisé en ce que** le logement radial (94) est obturé vers l'axe central (A-A') par un matériau de remplissage non métallique.

8. Embout (14) selon l'une quelconque des revendications 6 ou 7, **caractérisé en ce qu'**il comporte une pièce (90) calée sur la voûte d'extrémité (50) et/ou sur le capot (51), la pièce (90) délimitant le logement radial (94), la pièce étant, de préférence, une bague d'arrêt (90), notamment une bague intermédiaire d'arrêt d'une voûte de pression (28) de la conduite flexible (10).

9. Embout (14) selon l'une quelconque des revendications précédentes, **caractérisé en ce que** le capteur (58) est un capteur de détection électromagnétique, tel qu'un capteur inductif ou un capteur par courants de Foucault.

10. Embout (14) selon la revendication 9, **caractérisé en ce que** le capteur (58) comporte une bobine (98) entourant la couche à surveiller (26), ou comporte au moins une bobine d'axe radial par rapport à l'axe central (A-A').

11. Embout (14) selon l'une quelconque des revendications précédentes, **caractérisé en ce que** la distance radiale séparant le capteur (58) de la couche à surveiller (26) est inférieure à 3 cm.

12. Dispositif de suivi de l'intégrité d'une conduite flexible (10), comportant :
- un embout (14) selon l'une quelconque des revendications précédentes ;
- une unité (59) de traitement du signal émis par le capteur (58), raccordée au capteur (58) de détection.

13. Dispositif selon la revendication 12, **caractérisé en ce que** l'unité de traitement (59) comporte un module de correction, propre à compenser les variations de la température au niveau du capteur (58).

14. Procédé de suivi de l'intégrité d'une conduite flexible (10), comportant les étapes suivantes :
- fourniture d'un dispositif selon l'une quelconque des revendications 12 ou 13 ;
- activation du capteur (58) ;
- détection d'un mouvement axial de la couche à surveiller (26) par le capteur (58) de détection à travers l'espace radial intermédiaire (96).

15. Procédé selon la revendication 14, **caractérisé en ce que** la détection comporte la détermination d'une variation du champ magnétique situé au voisinage du capteur (58) après un mouvement axial de la couche à surveiller (26).

## Patentansprüche

1. Ansatzstück (14) zur Verbindung einer flexiblen Leitung (10) zum Transport eines Fluid, die eine zentrale Achse (A-A') hat, wobei das Ansatzstück (14) aufweist:
- wenigstens einen Endbereich (33) einer zu überwachenden Schicht (26) der flexiblen Leitung (10), wobei der Endbereich (33) zumindest teilweise metallisch ist,
- einen Endabschnitt (32) eines Druckmantels (20) der flexiblen Leitung (10),
- eine End-Hülse (50) und eine Hülle (51), die an der End-Hülse (50) fixiert ist, wobei die End-Hülse (50) und die Hülle (51) zwischen sich eine Kammer (52) begrenzen,
wobei das Ansatzstück (14) einen Sensor (58) zur Erfassung der Positionierung der zu überwachenden Schicht (26) aufweist, der imstande ist, eine axiale Bewegung des Endbereichs (33) zu erfassen, wobei der Sensor (58) auf der Außenseite Endabschnitts (32) des Druckmantels (20) und außerhalb der End-Hülse (50) angeordnet ist,
**dadurch gekennzeichnet, dass** der Sensor (58) im Inneren der Hülle (51) in der Kammer (52) untergebracht ist.

2. Ansatzstück (14) gemäß Anspruch 1, **dadurch gekennzeichnet, dass** der radiale Zwischenraum (96), der sich zwischen dem Sensor (58) und der zu überwachenden Schicht (26) erstreckt, mit einer metallischen Schutzwandung zwischen dem Sensor (58) und der zu überwachenden Schicht (26) versehen ist.

3. Ansatzstück (14) gemäß Anspruch 1 oder 2, **dadurch gekennzeichnet, dass** die zu überwachende Schicht (26) eine metallische Schicht ist, die im Inneren des Druckmantels (20) angeordnet ist, insbesondere eine metallische Innen-Karkasse ist, die im Innern des Druckmantels (20) angeordnet ist.

4. Ansatzstück (14) gemäß irgendeinem der Ansprüche, **dadurch gekennzeichnet, dass** der Endbereich (33) bezüglich der End-Hülse (50) axial vor dem Sensor (58) fixiert ist.

5. Ansatzstück (14) gemäß irgendeinem der vorhergehenden Ansprüche, **dadurch gekennzeichnet, dass** die flexible Leitung (10) eine Drückhülle (28) aufweist, die den Druckmantel (20) umgibt, wobei der Sensor (58) axial zwischen einerseits dem Endbereich (35) der Druckhülle (28) und andererseits der End-Hülse (50) des Ansatzstücks (14) angeordnet ist.

6. Ansatzstück (14) gemäß irgendeinem der vorhergehenden Ansprüche, **dadurch gekennzeichnet, dass** es eine Radialunterkunft (94) zur Aufnahme des Sensors (58) begrenzt, wobei die Radialunterkunft (94) radial zu der zentralen Achse (A-A') zu der zu überwachenden Schicht (26) hin ausmündet.

7. Ansatzstück (14) gemäß Anspruch 6, **dadurch gekennzeichnet, dass** die Radialunterkunft (94) zu der zentralen Achse (A-A') hin versperrt ist durch ein nicht-metallisches Füllmaterial.

8. Ansatzstück (14) gemäß irgendeinem der Ansprüche 6 oder 7, **dadurch gekennzeichnet, dass** es aufweist ein Stück (90), das an die End-Hülse (50) und/oder an die Hülle (51) festgekeilt ist, wobei das Stück (90) die Radialunterkunft (94) begrenzt, wobei das Stück bevorzugt ein Arretierungsring (90), insbesondere ein Zwischen-Arretierungsring der Druckhülle (28) der flexiblen Leitung (10), ist.

9. Ansatzstück (14) gemäß irgendeinem der vorhergehenden Ansprüche, **dadurch gekennzeichnet, dass** der Sensor (58) ein elektromagnetischer Erfassungssensor ist, wie z.B. ein induktiver Sensor oder ein Wirbelstrom-Sensor.

10. Ansatzstück (14) gemäß Anspruch 9, **dadurch gekennzeichnet, dass** der Sensor (58) eine Spule (98) aufweist, die die zu überwachende Schicht (26) umgibt, oder wenigstens eine Spule mit einer bezüglich der zentralen Achse (A-A') radialen Achse aufweist.

11. Ansatzstück (14) gemäß irgendeinem der vorhergehenden Ansprüche, **dadurch gekennzeichnet, dass** der radiale Abstand, der den Sensor (58) von der zu überwachenden Schicht (26) trennt, kleiner als 3cm ist.

12. Vorrichtung zur Verfolgung der Unversehrtheit einer flexiblen Leitung (10), aufweisend:
- ein Ansatzstück (14) gemäß irgendeinem der vorhergehenden Ansprüche,
- eine Einheit (59) zur Verarbeitung des Signals, das von dem Sensor (58) ausgegeben wird, die mit dem Sensor (58) zur Erfassung verbunden ist.

13. Vorrichtung gemäß Anspruch 12, **dadurch gekennzeichnet, dass** die Verarbeitungs-Einheit (59) aufweist ein Korrekturmodul, das imstande ist, die Variationen der Temperatur auf Höhe des Sensors (58) zu kompensieren.

14. Verfahren zur Verfolgung der Unversehrtheit einer flexiblen Leitung (10), aufweisend die folgenden Schritte:
- Bereitstellung einer Vorrichtung gemäß irgendeinem der Ansprüche 12 oder 13,
- Aktivierung des Sensors (58),
- Erfassung einer axialen Bewegung der zu überwachenden Schicht (26) mittels des Sensors (58) zur Erfassung quer durch den radialen Zwischenraum (96).

15. Verfahren gemäß Anspruch 14, **dadurch gekennzeichnet, dass** die Erfassung aufweist die Erfassung einer Variation des magnetischen Felds, das sich benachbart zu dem Sensor (58) befindet, nach einer axialen Bewegung der zu überwachenden Schicht (26).

## Claims

1. A connection end-fitting (14) of a fluid transport flexible pipe (10), having a central axis (A-A'), the end-fitting (14) comprising:
- at least one end region (33) of a layer to be monitored (26) of the flexible pipe (10), the end region (33) being at least partially metallic;
- an end segment (32) of a pressure sheath (20) of the flexible pipe (10);
- an end vault (50) and a cover (51) fastened on the end vault (50), the end vault (50) and the cover (51) defining a chamber (52) between them.
**characterized in that** the end-fitting (14) comprises a sensor (58) for detecting the position of the layer to be monitored (26), able to detect an axial movement of the end region (33), the sensor (58) being positioned at the end of the end segment (32) of the pressure sheath (20) and outside the end vault (50),
**characterized in that** the sensor (58) is housed inside the cover (51) in the chamber (52).

2. The end-fitting (14) according to claim 1, **characterized in that** the intermediate radial space (96) extending between the sensor (58) and the layer to be monitored (26) has no metal screen between the sensor (58) and the layer to be monitored (26).

3. The end-fitting (14) according to claim 1 or 2, **characterized in that** the layer to be monitored (26) is a metal layer arranged inside the pressure sheath (20), in particular a metal inner carcass positioned inside the pressure sheath (20).

4. The end-fitting (14) according to any one of the preceding claims, **characterized in that** the end region (33) is axially fixed relative to the end vault (50) at the front of the sensor (58).

5. The end-fitting (14) according to any one of the preceding claims, **characterized in that** the flexible pipe (10) comprises a pressure vault (28) surrounding the pressure sheath (20), the sensor (58) being positioned axially between part of the end region (35) of the pressure vault (28) on the one hand, and the end vault (50) of the end-fitting (14) on the other hand.

6. The end-fitting (14) according to any one of the preceding claims, **characterized in that** it defines a radial housing (94) for receiving the sensor (58), the radial housing (94) emerging radially toward the central axis (A-A'), toward the layer to be monitored (26).

7. The end-fitting (14) according to claim 6, **characterized in that** the radial housing (94) is closed off toward the central axis (A-A') by a nonmetallic filler material.

8. The end-fitting (14) according to any one of claims 6 or 7, **characterized in that** it comprises a piece (90) fitted on the end vault (50) and/or on the cover (51), the piece (90) defining the radial housing (94), the piece being, preferably, a stop ring (90), in particular an intermediate stop ring of a pressure vault (28) of the flexible pipe (10).

9. The end-fitting (14) according to any one of the preceding claims, **characterized in that** the sensor (58) is an electromagnetic detection sensor, such as an inductive sensor or a Foucault current sensor.

10. The end-fitting (14) according to claim 9, **characterized in that** the sensor (58) comprises a coil (98) surrounding the layer to be monitored (26), or comprises at least one coil with a radial axis relative to the central axis (A-A').

11. The end-fitting (14) according to any one of the preceding claims, **characterized in that** the radial distance separating the sensor (58) from the layer to be monitored (26) is smaller than 3 cm.

12. A device for monitoring the integrity of a flexible pipe (10), comprising:
- an end-fitting (14) according to any one of the preceding claims;
- a processing unit (59) for processing the signal emitted by the sensor (58), connected to the detection sensor (58).

13. The device according to claim 12, **characterized in that** the processing unit (59) comprises a correction module, able to compensate the variations of the temperature at the sensor (58).

14. A method for monitoring the integrity of a flexible pipe (10), comprising the following steps:
- providing a device according to any one of claims 12 or 13;
- activating the sensor (58);
- detecting an axial movement of the layer to be monitored (26) by the detection sensor (58) through the intermediate radial space (96).

15. The method according to claim 14, **characterized in that** the detection comprises the determination of a variation of the magnetic field located near the sensor (58) after an axial movement of the layer to be monitored (26).
